# EUROPÄISCHE PATENTSCHRIFT

(11) **EP 0 858 016 B1**
(45) Veröffentlichungstag und Bekanntmachung des Hinweises auf die Patenterteilung: **06.06.2001**
(21) Anmeldenummer: 98100832.9
(22) Anmeldetag: 20.01.1998
(51) Int. Cl.: G05B 19/409

(54) **Numerische Steuerung mit Bedienoberfläche in Fenstertechnik**
Numerical control device with control panel in windows technology
Dispositif de contrôle numérique avec interface de travail utilisant des fenêtres

(30) Priorität: 06.02.1997 DE 19704416
(43) Veröffentlichungstag der Anmeldung: 12.08.1998
(73) Patentinhaber: Dr. Johannes Heidenhain GmbH, 83292 Traunreut (DE)
(72) Erfinder: Rutkowski, Christian, Dipl.-Phys., 83278 Traunstein (DE)

(56) Entgegenhaltungen:
- DE-A- 19 515 198
- RABE H -J ET AL: "Veredelt; CNC-Bahnsteuerung unter Windows" ELEKTRONIK PRAXIS, 14 APRIL 1994, DE, Bd. 29, Nr. 7, ISSN 0341-5783, Seiten 134-136, XP002064636

## Beschreibung

Die vorliegende Erfindung betrifft eine Vorrichtung zur Steuerung einer Werkzeugmaschine nach dem Oberbegriff des Anspruches 1.

Neben Werkzeugmaschinen, die zu einem bestimmten Zeitpunkt lediglich eine einzige Aufgabe abarbeiten können, sind Werkzeugmaschinen mit mehreren Bearbeitungseinheiten bekannt, an denen gleichzeitig und unabhängig voneinander bestimmte Aufgaben abgearbeitet werden können. Man spricht in diesem Zusammenhang auch von verschiedenen Bearbeitungskanälen einer Werkzeugmaschine. Bei den verschiedenen Aufgaben kann es sich beispielsweise um das gleichzeitige Schleifen und Abrichten einer Schleifscheibe oder um das gleichzeitige Senkerodieren und Fräsen einer weiteren Erodierelektrode handeln. Daneben existieren vielfältigste weitere Möglichkeiten, bestimmte Aufgaben unabhängig voneinander an separaten Bearbeitungseinheiten einer Werkzeugmaschine abzuarbeiten. Seitens der Steuerung einer derartigen Werkzeugmaschine ergeben sich nunmehr bestimmte Anforderungen. So ist zum einen wünschenswert, wenn verschiedenste Informationen visualisiert werden können, die den unterschiedlichen Bearbeitungseinheiten zugeordnet sind. Hierbei kann es sich beispielsweise um graphische Darstellungen der aktuellen Bearbeitungssituation, des aktuellen Betriebszustandes u.v.m. handeln. Zum anderen muß auf Seiten der Steuerung einer derartigen Werkzeugmaschine außerdem sichergestellt sein, daß die durch einen Anwender erfolgenden Eingaben auch jeweils der gewünschten Bearbeitungseinheit zugeordnet werden. Insbesondere soll der Anwender möglichst problemlos erkennen können, auf welche der zur Verfügung stehenden Bearbeitungseinheiten sich die erfolgten oder erfolgenden Eingaben tatsächlich beziehen.

Aus der US 5,252,899 ist in diesem Zusammmenhang eine numerische Steuerung für eine Werkzeugmaschine bekannt, die mehrere Controller umfaßt. Die verschiedenen Controller können allesamt verschiedene Steuerungsaufgaben wahrnehmen und sind zur parallelen Abarbeitung verschiedener Bearbeitungsaufgaben einer Werkzeugmaschine geeignet. Über eine Busstruktur sind die Controller mit verschiedenen Peripheriekomponenten verbunden, worunter u.a. auch eine Anzeigeeinheit inclusive einer Eingabeeinheit ist. Die Anzeige- und Eingabeeinheit können demzufolge von jedem der vorgesehenen Controller genutzt werden. Details hinsichtlich der Visualisierung der zu den verschiedenen Bearbeitungseinheiten gehörenden Informationen sowie hinsichtlich der Zuordnung von Eingaben zu einer bestimmten Bearbeitungseinheit finden sich in dieser Druckschrift jedoch nicht.

Aufgabe der vorliegenden Erfindung ist es daher, eine Vorrichtung zur Steuerung einer Werkzeugmaschine zu schaffen, die mehrere separate Bearbeitungseinheiten zur Werkstückbearbeitung umfaßt, die gleichzeitig und unabhängig voneinander bestimmte Aufgaben abarbeiten können. Es soll dabei zum einen die Visualisierung von Informationen für jede Bearbeitungseinheit möglich sein. Zum anderen ist erforderlich, daß auch die entsprechenden Eingaben - möglichst für den Anwender erkennbar - der jeweils gewünschten Bearbeitungseinheit zugeordnet werden.

Diese Aufgabe wird gelöst durch eine Vorrichtung mit den Merkmalen im kennzeichnenden Teil des Anspruches 1.
Vorteilhafte Maßnahmen zur Ausgestaltung der erfindungsgemäßen Vorrichtung ergeben sich aus den Maßnahmen in den abhängigen Ansprüchen.

Innerhalb der erfindungsgemäßen Vorrichtung zur Steuerung einer Werkzeugmaschine wird nunmehr eine Fenster-Technik zur Visualisierung der interessierenden Informationen auf einer Anzeigeeinheit eingesetzt. Hierbei ist jeder Bearbeitungseinheit auf Seiten der Anzeigeeinheit mindestens ein vom Anwender definiert auswählbares bzw. aktivierbares Anzeigefenster zugeordnet, in dem verschiedenartigste Informationen zu den verschiedenen Bearbeitungseinheiten darstellbar sind. Bezüglich jedes Anzeigefensters sind kontextbezogene Eingabemöglichkeiten für den Anwender vorgesehen. Gleichzeitig ist gewährleistet, daß die erfolgenden Eingaben durch den Anwender der gewünschten Bearbeitungseinheit zugeordnet werden bzw. für den Anwender eindeutig ersichtlich ist, auf welche Bearbeitungseinheit die erfolgten oder die erfolgenden Eingaben sich beziehen.

Es werden demzufolge innerhalb der erfindungsgemäßen Vorrichtung zur Steuerung einer Werkzeugmaschine mit mehreren Bearbeitungseinheiten Techniken zur Visualisierung von Informationen eingesetzt, die aus Betriebssystemen bzw. Benutzeroberflächen wie MICROSOFT WINDOWS® bekannt sind. Die Verwendung derartiger Techniken gestattet eine intuitive Bedienung der jeweiligen Werkzeugmaschine, verbunden mit der Möglichkeit, sich stets einfach über den gerade aktuellen Betriebszustand einer Bearbeitungseinheit zu informieren oder andere interessierende Informationen diesbezüglich darzustellen.
Werkzeugmaschinensteuerungen unter WINDOWS® sind prinzipiell bereits bekannt; beispielsweise sei hierzu auf die Veröffentlichung "Veredelt - CNC-Bahnsteuerung unter Windows" von H.-J. Rabe in Elektronik Praxis Nr. 7, April 1994, S. 134-136 verwiesen. Hinweise zur Ausgestaltung einer Werkzeugmaschinensteuerung mit mehreren Bearbeitungseinheiten auf Grundlage derartiger Überlegungen finden sich in dieser Veröffentlichung jedoch nicht.

Hinsichtlich der konkreten Ausgestaltung der erfindungsgemäßen Vorrichtung existieren selbstverständlich eine Reihe von Ausführungsvarianten, die je nach zu steuernder Werkzeugmaschine realisiert werden können.

Weitere Vorteile sowie Einzelheiten der erfindungsgemäßen Vorrichtung ergeben sich aus der nachfolgenden Beschreibung eines Ausführungsbeispiels anhand der beiliegenden Figuren.

Dabei zeigt
- Figur 1: eine schematisierte Gesamtdarstellung der erfindungsgemäßen Vorrichtung;
- Figur 2: eine Ansicht der Anzeigeeinheit der erfindungsgemäßen Vorrichtung.

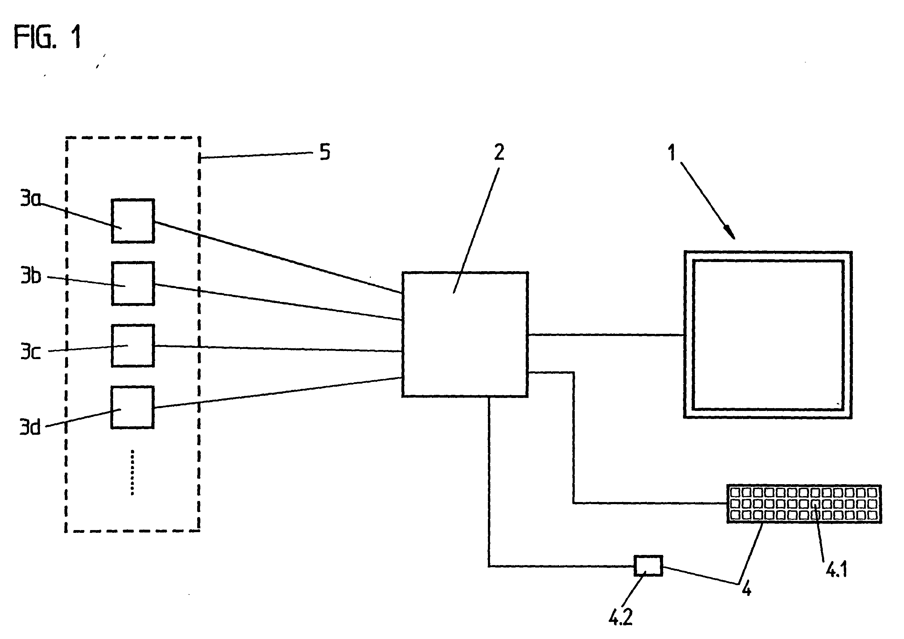

In Figur 1 ist eine schematisierte Darstellung eines Ausführungsbeispieles der erfindungsgemäßen Vorrichtung gezeigt. Diese umfaßt neben einer zentralen Steuereinheit 2 u.a. mehrere separate Bearbeitungseinheiten 3a, 3b, 3c, 3d einer Werkzeugmaschine 5. Die separaten Bearbeitungseinheiten 3a - 3d der Werkzeugmaschine 5 können hierbei verschiedenste Bearbeitungsfunktionen gleichzeitig und unabhängig voneinander abarbeiten. Wie bereits eingangs erwähnt kann dies beispielsweise das gleichzeitige Schleifen und Abrichten einer Schleifscheibe sein, das gleichzeitige Senkerodieren und Fräsen einer weiteren Erodierelektrode oder aber die gleichzeitige Mehrschlittenbearbeitung an Drehbänken etc.. Aus dieser beispielhaften Aufzählung geht demzufolge hervor, daß die erfindungsgemäße Vorrichtung auf Grundlage verschiedenster Werkzeugmaschinen-Typen realisierbar ist.

Die Steuerung der verschiedenen Bearbeitungseinheiten 3a, 3b, 3c, 3d der Werkzeugmaschine 5 erfolgt über die zentrale Steuereinheit 2, die zu diesem Zweck entweder mit verschiedenen Prozessoren ausgestattet sein kann oder aber die parallele Bearbeitung im zeitlichen Multitasking-Betrieb ermöglicht.
Darüberhinaus umfaßt die erfindungsmäße Vorrichtung eine Anzeigeeinheit 1, beispielsweise ausgebildet als Rechner-Monitor, sowie mindestens eine Eingabeeinheit 4. Als separate Eingabeeinheiten 4 sind in der schematisierten Darstellung von Figur 1 eine Rechner-Tastatur 4.1 sowie zusätzlich ein optionales Zeigegerät 4.2 in Form einer Maus oder eines Trackballs vorgesehen. Über die Eingabeeinheiten 4 erfolgt die Eingabe von Befehlen und/oder Daten durch den Anwender, die von der zentralen Steuereinheit 2 weiterverarbeitet werden, um etwa eine gewünschte Werkstückbearbeitung zu programmieren, bestimmte Informationen auf der Anzeigeeinheit 1 zu visualisieren usw..

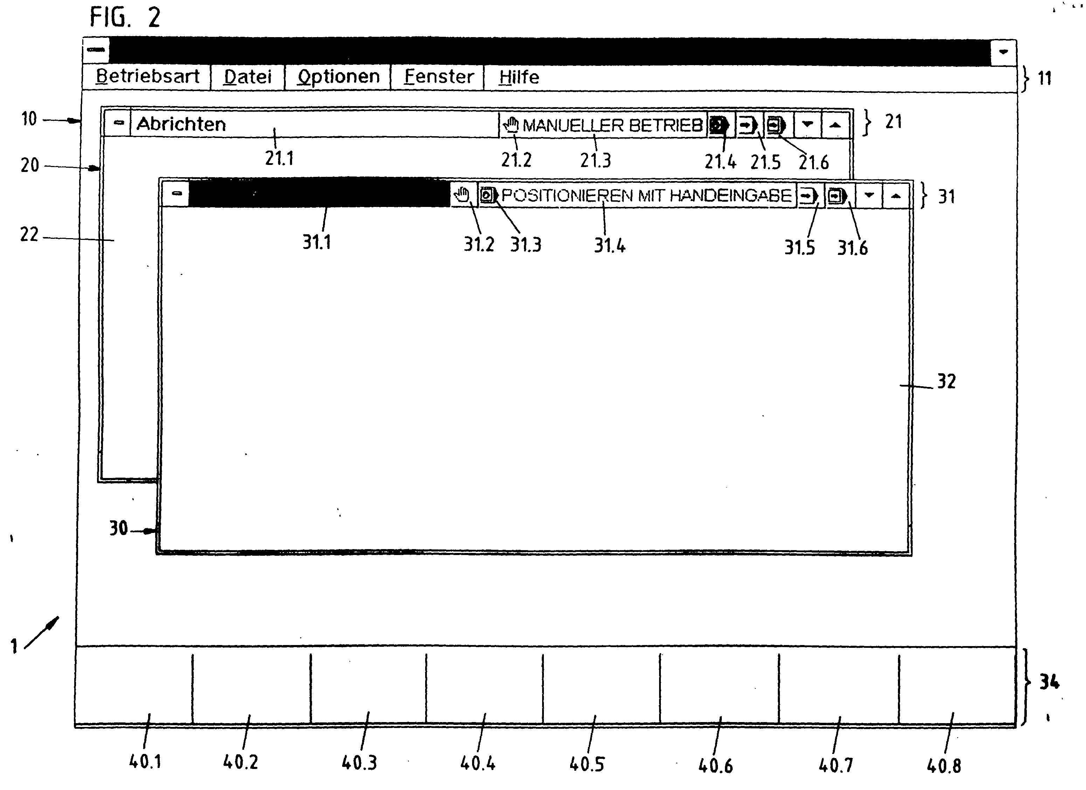

Anhand der beispielhaften Darstellung in Figur 2 sollen nachfolgend die erfindungsgemäßen Maßnahmen anhand einer Ansicht der Anzeigeeinheit 1 detailliert erläutert werden.
Auf dem Monitor der Anzeigeeinheit 1 sind dabei u.a. zwei Anzeigefenster 20, 30 erkennbar, die unterschiedlichen Bearbeitungseinheiten bzw. Bearbeitungsaufgaben der jeweiligen Werkzeugmaschine zugeordnet sind und gleichzeitig abgearbeitet werden können. Jeder vorgesehenen Bearbeitungseinheit der Werkzeugmaschine ist demzufolge ein Anzeigefenster 20, 30 zugeordnet, dessen prinzipieller Aufbau nachfolgend noch näher beschrieben wird.

Für jedes der zur Verfügung stehenden Anzeigefenster 20, 30 existieren bestimmte kontextbezogene Eingabemöglichkeiten, welche über die vorhandenen Eingabeeinheiten wie Tastatur oder Maus angesprochen werden können. Als kontextbezogene Eingabemöglichkeit ist in der dargestellten Ausführungsform zum einen ein Auswahl-Menü in einer übergeordneten Titelzeile 11 sowie zum anderen eine Softkeyzeile 34 mit einer Reihe, auf der Anzeigeeinheit 1 dargestellter Softkeys 40.1 - 40.8 vorgesehen. Die über diese Eingabemöglichkeiten erfolgenden Anwender-Eingaben sind jeweils immer auf ein bestimmtes Anzeigefenster 20, 30 bezogen, d.h. je nach Anzeigefenster 20, 30 variieren sowohl die den Menüpunkten in der Titelzeile 11 zugeordneten Untermenüs als auch die Angaben in der Softkeyzeile 34.
Die verschiedenen Menüpunkte "Betriebsart", "Datei", "Optionen", "Fenster" und "Hilfe" in der Titelzeile 11 der Anzeigeeeinheit 1 können auf bekannte Art und Weise über die zur Verfügung stehenden Eingabeeinheiten angesprochen werden. Beispielsweise ist es möglich, diese über die Maus und einen zugehörigen Cursor ebenso zu aktivieren wie über eine bestimmte Tastatur-Kombination. Pro Menüpunkt steht nach entsprechender Aktivierung ein Untermenü in Form eines Pull-Down-Menüs zur Verfügung, dessen, einzelne Menüpunkte ebenso wie die Menüpunkte der Titelzeile in bekannter Art und Weise angesprochen bzw. aktiviert werden können. Die Aktivierung der verschiedenen Menüpunkte in der Titelzeile 11 orientiert sich demzufolge an bekannten PC-Benutzeroberflächen, so daß eine einfache Bedienung für den Anwender resultiert.
Die weitere kontextbezogene Eingabemöglichkeit über die Softkeyzeile 34 sieht vor, bestimmte Funktionstasten auf der Tastatur zu nutzen, um die gewünschten Funktionen zu aktivieren, beispielsweise die Tasten F1 - F12 auf einer herkömmlichen Rechner-Tastatur. Den verschiedenen Funktionstasten F1 - F12 können dabei unterschiedlichste Funktionen bzgl. der jeweiligen Bearbeitungseinheiten zugeordnet sein.

Nachfolgend sei der dargestellte Aufbau bzw. Inhalt der Anzeigefenster 20, 30 für die verschiedenen Bearbeitungseinheiten der jeweiligen Werkzeugmaschine erläutert. Die Anzeigefenster 20, 30 weisen in der dargestellten Ausführungsform grundsätzlich allesamt einen zweiteiligen Aufbau auf, bestehend aus einer Titelzeile 21, 31 und einem Anzeigebereich 22, 32.
Die Titelzeilen 21, 31 der verschiedenen Anzeigefenster 20, 30 umfassen dabei zumindest einen Titelbereich 21.1, 31.1, in dem beispielsweise die Bezeichnung der zugehörigen Bearbeitungseinheit oder Bearbeitungsfunktion angeordnet ist. Im dargestellten Ausführungsbeispiel wird in den beiden Titelbereichen 21.1, 31.1 jeweils die konkrete textmäßige Bezeichnung der zugehörigen Bearbeitungsfunktion angezeigt, nämlich zum einen "Schleifen" und zum anderen "Abrichten". Selbstverständlich kann alternativ zur Darstellung der textmäßigen Bezeichnung auch ein geeignetes graphisches Symbol im Titelbereich 21.1, 31.1 angezeigt werden, um zu verdeutlichen, zu welcher Bearbeitungseinheit das Anzeigefenster 20, 30 gehört. Daneben sind auch Mischdarstellungen aus textmäßiger Bezeichnung und graphischen Symbolen an dieser Stelle einsetzbar usw..

Neben den Titelbereichen 21.1, 31.1 weisen die Titelzeilen 21, 31 der Anzeigefenster 20, 30 desweiteren Betriebszustandsbereiche 21.2 - 21.6, 31.2 - 31.6 auf, die vom Anwender über die verschiedenen Eingabeeinheiten aktivierbar sind. Die Betriebszustandsbereiche 21.2 - 21.6, 31.2 - 31.6 eines Anzeigefensters 20, 30 umfassen dabei vorzugsweise die verschiedenen möglichen Betriebszustände oder Betriebsarten einer Bearbeitungseinheit. Pro möglicher Betriebsart einer Bearbeitungseinheit steht in der dargestellten Ausführungsform ein graphisches Symbol zur Verfügung, das dem Anwender auch ohne zugehörigen Text verständlich ist und veranschaulicht, welche Betriebsarten für die entsprechende Bearbeitungseinheit jeweils möglich sind. Die momentan aktuelle bzw. aktive Betriebsart wird in der Titelzeile 21, 31 vorzugsweise in einem der Betriebszustandsbereiche 21.3, 31.4 zusätzlich zum Symbol desweiteren textuell angezeigt, so daß für den Anwender problemlos der momentane Betriebszustand einer Bearbeitungseinheit erkennbar ist.

Neben der in Figur 2 gezeigten Form der Titelzeile 21, 31, insbesondere der Anordnung der verschiedenen Betriebszustandsbereiche 21.2 - 21.6, 31.2 - 31.6 existieren selbstverständlich auch alternative Möglichkeiten, wie dem jeweiligen Anwender die Information bezüglich der momentan aktiven Betriebsart dargeboten werden kann. Beispielsweise ist es erfindungsgemäß ebenso möglich, lediglich einen einzigen Betriebszustandsbereich in der Titelzeile 21, 31 vorzusehen, in dem lediglich die momentan aktive Betriebsart textuell und/oder graphisch angezeigt wird. Die weiteren möglichen und anwählbaren Betriebszustände sind hingegen in Form eines Untermenüs als Pull-Down-Menü selektierbar usw..

Die in den Titelzeilen 21, 31 vorzugsweise über das Zeigegerät bzw. die Maus aktivierbaren Bereiche am linken und rechten Rand dienen zum Schließen, Vergrößern und Verkleinern der Anzeigefenster, wie dies auch bei üblichen WINDOWS-Programmen bekannt ist.
In den Anzeigebereichen 22, 32 der zur Verfügung stehenden Anzeigefenster 21, 31 werden dem Anwender verschiedenste Informationen bezüglich der zu diesem Anzeigefenster 20, 30 gehörenden Bearbeitungseinheit dargeboten bzw. visualisiert. Hierzu gehört beispielsweise die Anzeige bestimmter Anwender-Eingaben, die Anzeige der Positionen von Maschinenachsen, die Darstellung abgearbeiteter NC-Programme, die graphische Darstellung des Werkstückes, Statusinformationen bezüglich des Werkzeuges und/oder der Werkzeugmaschine, Werkstückbearbeitungssimulationen u.v.m.. In den Anzeigebereichen 22, 32 können demzufolge verschiedenste Arten von Informationen für den jeweiligen Anwender visualisiert werden.

Die für die verschiedenen Bearbeitungseinheiten vorgesehenen Anzeigefenster 20, 30 können vom jeweiligen Anwender während des gleichzeitigen Abarbeitens verschiedener Bearbeitungsaufgaben wahlweise aktiviert werden. Mit der Aktivierung eines bestimmten Anzeigefensters 30 ist desweiteren verbunden, daß dieses jeweilige Anzeigefenster 30 unverdeckt auf der Anzeigeeinheit dargestellt wird. Andere, derzeit nicht-aktivierte Anzeigefenster 20, 30 können dadurch ganz oder teilweise verdeckt dargestellt werden, wie dies beispielsweise in Figur 2 der Fall ist, wo das momentan aktivierte Anzeigefenster 30 das nicht-aktivierte Anzeigefenster 20 teilweise verdeckt. Alternativ ist es selbstverständlich möglich, auch nicht-aktivierte Anzeigefenster auf der Anzeigeeinheit unverdeckt nebeneinander darzustellen, wenn die Fenstergrößen geeignet gewählt werden. In diesem Fall ist es zusätzlich erforderlich, das aktivierte Anzeigefenster hervorgehoben zu markieren. Dies kann beispielsweise durch die farblich hervorgehobene Darstellung des Titelbereiches 21.1, 31.1 erfolgen, wie dies auch in der Ausführungsform in Figur 2 gezeigt ist, wo der Titelbereich 31.1 des aktivierten Anzeigefensters 30 farblich invers zum Titelbereich 21.1 des nicht-aktivierten Anzeigefensters 20 dargestellt ist. Eine derartige Maßnahme kann demzufolge auch zusätzlich zum nicht-verdeckten Darstellen eines Anzeigefensters 20, 30 vorgesehen werden. Selbstverständlich kann die Hervorhebung des momentan aktivierten Anzeigefensters 30 auch auf andere Art und Weise erfolgen.
Desweiteren ist mit der Aktivierung eines Anzeigefensters 30 verbunden, daß diesem Anzeigenster 30 bzw. der zugehörigen Bearbeitungseinheit die kontextbezogenen Eingabemöglichkeiten zugeordnet werden. Hierunter seien im dargestellten Ausführungsbeispiel die Eingabemöglichkeiten über die Titelzeile 11 sowie über die Softkey-Zeile 34 verstanden. Eingaben über diese Eingabemöglichkeiten beziehen sich demzufolge auf die jeweilige Bearbeitungseinheit und die mit dieser Bearbeitungseinheit verbundenen Funktionen dieser Eingabemöglichkeiten.
Auch die weiteren, vorzugsweise über die Tastatur erfolgenden Eingaben beziehen sich auf das jeweils aktivierte Anzeigefenster und die zugehörige Bearbeitungseinheit. Dies betrifft etwa die Eingabe von Befehlen, Koordinaten etc., je nachdem welche Informationen im Anzeigebereich 32 des aktivierten Anzeigefensters 30 gerade visualisiert werden und welche Eingaben in diesem Zusammenhang überhaupt vorgesehen bzw. möglich sind.

Die eigentliche Aktivierung des gewünschten Anzeigefensters 20, 30 kann durch den Anwender auf verschiedenste Art und Weise erfolgen. Beispielsweise ist es möglich, zu diesem Zweck in der Titelzeile 11 einen Aktivierungsbereich in Form eines Menüpunktes vorzusehen, dessen Untermenüpunkte die verschiedenen vorhandenen Bearbeitungseinheiten respektive Anzeigefenster sind. Für eine derartige Aktivierung kann etwa der Menüpunkt Fenster" in der Titelzeile 11 vorgesehen werden. Desweiteren kann die Aktivierung eines Anzeigefensters über Softkeys erfolgen. Ferner ist die Aktivierung eines Anzeigefensters über das Zeigegerät auf der Anzeigeeinheit möglich. Beispielsweise kann in Verbindung mit dem Druck auf eine Maustaste ein bestimmtes Anzeigefenster aktiviert werden, wenn der Mauszeiger im Titelbereich 21.1, 31.1 plaziert wird usw..

Für jede Bearbeitungseinheit bzw. jeden Bearbeitungskanal der Werkzeugmaschine existieren nunmehr eine Reihe möglicher Betriebszustände bzw. Betriebsarten. Hierbei handelt es sich jeweils um eine zusammengefaßte Gruppe möglicher Tätigkeiten, beispielsweise die Erstellung eines NC-Programmes, den manuellen Betrieb, das Positionieren mit Handeingabe, den Programmlauf etc.. Zumindest der gerade aktive Betriebszustand wird in der der Titelzeile der Anzeigefenster 21, 31 in einem Betriebszustandsbereich 21.3, 31.4 dargestellt, was im Ausführungsbeispiel der Figur 2 in textueller Form erfolgt. Neben dem in textueller Form angezeigten, aktiven Betriebszustand sind dabei die weiteren möglichen Betriebszustände in graphischer Form in der Titelzeile visualisiert, was in Form geeigneter Symbole erfolgt. Selbstverständlich kann dabei auch lediglich ein Teil der möglichen Betriebszusände in dieser Form angezeigt werden etc..
Die Wahl eines gewünschten Betriebszustandes bzw. einer gewünschten Betriebsart innnerhalb des momentan aktivierten Anzeigefensters 30 kann ebenfalls wieder auf verschiedenste Art und Weise erfolgen. So ist es bei der in Figur 2 dargestellten Ausführungsform möglich, durch Plazieren eines Cursors bzw. Mauszeigers auf einem der graphischen Symbole in den Betriebszustandsbereichen 31.2 - 31.6 und Druck auf eine Maustaste die gewünschte Betriebsart zu wählen, die dann wiederum hervorgehoben in textueller Form visualisiert wird. Alternativ kann die Wahl der Betriebsart auch über den Menüpunkt "Betriebsart" in der Titelzeile 11 erfolgen, die eine der vorab erläuterten kontextbezogenen Eingabemöglichkeiten darstellt, d.h.auf das jeweils aktivierte Anzeigefenster 30 bezogen ist. Zu diesem Menüpunkt existiert wiederum ein Pull-Down-Menü mit den verschiedenen möglichen Betriebsarten als Auswahloptionen. Die Wahl des jeweiligen Betriebszustandes aus diesem Pull-Down-Menü erfolgt über die Tastatur oder über die Maus etc..
Mit der Aktivierung eines bestimmten Betriebszustandes ist wiederum verbunden, daß anschließend erfolgende Befehle und Eingaben in einer Form gegliedert werden, die spezifisch für die jeweilige Bearbeitungseinheit ist. Ebenso ist die ggf. vorgesehene Anzeige von Daten im Anzeigebereich spezifisch gegliedert bezüglich der jeweiligen Betriebsart.

Aufgrund der erfindungsmäßen Maßnahmen resultiert somit eine Benutzeroberfläche für eine Vorrichtung zur Steuerung von Werkzeugmaschinen mit mehreren Bearbeitungseinheiten, die einfach bzw. intuitiv bedienbar und an vielfältigste Maschinenkonfigurationen anpassbar ist.

## Patentansprüche

1. Vorrichtung zur Steuerung einer Werkzeugmaschine, die mehrere separate Bearbeitungseinheiten zur Werkstückbearbeitung umfaßt, die gleichzeitig und unabhängig voneinander bestimmte Aufgaben abarbeiten können, sowie mit einer Anzeigeeinheit und mindestens einer zugeordneten Eingabeeinheit,
dadurch gekennzeichnet,
daß jeder Bearbeitungseinheit (3a, 3b, 3c, 3d) seitens der Anzeigeeinheit (1) mindestens ein selektiv aktivierbares Anzeigefenster (20, 30) zugeordnet ist, in denen zugehörige Informationen visualisierbar sind, wobei das momentan aktive Anzeigefenster (30) unverdeckt dargestellt und/oder hervorgehoben markiert ist und für jedes vorhandene Anzeigefenster (20, 30) kontextbezogene Eingabemöglichkeiten vorgesehen sind, über die Eingaben möglich sind, welche spezifisch für die zugehörige Bearbeitungseinheit (3a, 3b, 3c, 3d) sind.

2. Vorrichtung nach Anspruch 1, dadurch gekennzeichnet, daß eine kontextbezogene Eingabemöglichkeit als Auswahl-Menü in einer Titelzeile (21, 31) mit ein oder mehreren Pull-Down-Menüs ausgebildet ist.

3. Vorrichtung nach Anspruch 1, dadurch gekennzeichnet, daß eine kontextbezogene Eingabemöglichkeit als Softkey-Zeile (34) ausgebildet ist.

4. Vorrichtung nach Anspruch 1, dadurch gekennzeichnet, daß jedes Anzeigefenster (20, 30) eine Titelzeile (21, 31) sowie einen Anzeigebereich (22, 32) umfaßt.

5. , Vorrichtung nach Anspruch 4, dadurch gekennzeichnet, daß in der Titelzeile (21, 31) in einem Titelbereich (21.1, 31.1) eine textuelle Bezeichnung der zugehörigen Bearbeitungseinheit (3a, 3b, 3c, 3d) und/oder ein graphisches Symbol der zugehörigen Bearbeitungseinheit (3a, 3b, 3c, 3d) dargestellt ist.

6. Vorrichtung nach Anspruch 1, dadurch gekennzeichnet, daß in der Titelzeile (21, 31) in Betriebszustandsbereichen (21.2 - 21.6, 31.2 - 31.6) die möglichen Betriebszustände der zugehörigen Bearbeitungseinheit (3a, 3b, 3c, 3d) in Form textueller Bezeichnungen und/oder graphischer Symbole dargestellt sind.

7. Vorrichtung nach Anspruch 6, dadurch gekennzeichnet, daß der Titelbereich (21.1, 31.1) des momentan aktivierten Anzeigefensters (20, 30) hervorgehoben markiert ist.

8. Vorrichtung nach Anspruch 1, dadurch gekennzeichnet, daß zur selektiven Aktivierung eines Anzeigefensters (20, 30) ein Auswahl-menü mit sämtlichen möglichen Anzeigefenstern (20, 30) vorgesehen ist.

9. Vorrichtung nach Anspruch 1, dadurch gekennzeichnet, daß die selektive Aktivierung eines Anzeigefensters (20, 30) über ein als Zeigegerät (4.2) ausgebildete Eingabeeinheit in Verbindung mit einem Tastendruck auf diese Eingabeeinheit erfolgt, wenn der Zeiger des Zeigegerätes (4.2) im Titelbereich (21.1, 31.1) des Anzeigefensters (20, 30) plaziert ist.

10. Vorrichtung nach Anspruch 1, dadurch gekennzeichnet, daß für jede Bearbeitungseinheit (3a, 3b, 3c, 3d) mehrere Betriebszustände möglich sind, die im jeweils aktivierten Anzeigefenster (20, 30) wählbar sind.

## Claims

1. Apparatus for controlling a machine tool which includes a plurality of separate processing units for processing a workpiece, which units can execute specific tasks simultaneously and independently of one another, and having a display unit and at least one associated input unit,
characterised in that,
on the display unit (1) side, there is associated with each processing unit (3a, 3b, 3c, 3d) at least one display window (20, 30) which can be activated selectively and in which corresponding information can be represented visually, the currently active display window (30) being shown uncovered and/or marked for emphasis and there being provided for each available display window (20, 30) context-related input capabilities by means of which are possible the inputs which are specific to the corresponding processing unit (3a, 3b, 3c, 3d).

2. Apparatus according to claim 1, characterised in that a context-related input capability is formed as a selection menu in a title line (21, 31) with one or more pull-down menus.

3. Apparatus according to claim 1, characterised in that a context-related input capability is formed as a soft-key line (34).

4. Apparatus according to claim 1, characterised in that each display window (20, 30) includes a title line (21, 31) as well as a display area (22, 32).

5. Apparatus according to claim 4, characterised in that in the title line (21, 31) a text designation of the corresponding processing unit (3a, 3b, 3c, 3d) and/or a graphical symbol of the corresponding processing unit (3a, 3b, 3c, 3d) is shown in a title area (21.1, 31.1).

6. Apparatus according to claim 1, characterised in that in the title line (21, 31) the possible operating states of the corresponding processing unit (3a, 3b, 3c, 3d) are shown in the form of text designations and/or graphical symbols in operating state areas (21.2-21.6, 31.2-31.6).

7. Apparatus according to claim 6, characterised in that the title area (21.1, 31.1) of the currently activated display window (20, 30) is marked for emphasis.

8. Apparatus according to claim 1, characterised in that for the selective activation of a display window (20, 30) a selection menu with all the possible display windows (20, 30) is provided.

9. Apparatus according to claim 1, characterised in that the selective activation of a display window (20, 30) is effected via an input unit formed as a pointer device (4.2) in conjunction with pressing a key on this input unit when the pointer of the pointer device (4.2) is placed in the title area (21.1, 31.1) of the display window (20, 30).

10. Apparatus according to claim 1, characterised in that for each processing unit (3a, 3b, 3c, 3d) a plurality of operating states is possible which can be selected in the respectively activated display window (20, 30).

## Revendications

1. Dispositif pour la commande d'une machine-outil comprenant plusieurs unités d'usinage séparées pour l'usinage de pièces, unités qui peuvent effectuer simultanément et indépendamment les unes des autres des tâches déterminées, ainsi qu'une unité d'affichage et au moins une unité d'introduction associée, **caractérisé** par le fait qu'à chaque unité d'usinage (3a, 3b, 3c, 3d) est associé, côté unité d'affichage (1), au moins une fenêtre d'affichage (20, 30) activable sélectivement, permettant la visualisation d'informations correspondantes, la fenêtre d'affichage (30) momentanément activée étant représentée non masquée et/ou marquée en surbrillance et des possibilités d'introduction liées au contexte étant prévues pour chaque fenêtre d'affichage (20, 30) existante, par lesquelles peuvent être effectuées des introductions qui sont spécifiques pour l'unité d'usinage correspondante (3a, 3b, 3c, 3d).

2. Dispositif suivant la revendication 1, **caractérisé** par le fait qu'une possibilité d'introduction liée au contexte est réalisée sous forme de menu de sélection dans une barre de titres (21, 31) avec un ou plusieurs menus déroulants.

3. Dispositif suivant la revendication 1, **caractérisé** par le fait qu'une possibilité d'introduction liée au contexte est réalisée sous forme de barre de boutons logiciels (34).

4. Dispositif suivant la revendication 1, **caractérisé** par le fait que chaque fenêtre d'affichage (20, 30) comprend une barre de titres (21, 31) ainsi qu'une zone d'affichage (22, 32).

5. Dispositif suivant la revendication 4, **caractérisé** par le fait que dans la barre de titres (21, 31) est représentée, dans une zone de titres (21.1, 31.1), une mention-texte de l'unité d'usinage correspondante (3a, 3b, 3c, 3d) et/ou un symbole graphique de l'unité d'usinage correspondante (3a, 3b, 3c, 3d).

6. Dispositif suivant la revendication 1, **caractérisé** par le fait que dans la barre de titres (21, 31) sont représentés, dans des zones d'états de fonctionnement (21.2-21.6, 31.2-31.6), les états de fonctionnement possibles de l'unité d'usinage correspondante (3a, 3b, 3c, 3d) sous la forme de mentions-textes et/ou de symboles graphiques.

7. Dispositif suivant la revendication 6, **caractérisé** par le fait que la zone de titres (21.1, 31.1) de la fenêtre d'affichage momentanément activée (20, 30) est marquée en surbrillance.

8. Dispositif suivant la revendication 1, **caractérisé** par le fait qu'en vue de l'activation sélective d'une fenêtre d'affichage (20, 30), il est prévu un menu de sélection avec toutes les fenêtres d'affichage possibles (20, 30).

9. Dispositif suivant la revendication 1, **caractérisé** par le fait que l'activation sélective d'une fenêtre d'affichage (20, 30) s'effectue en passant par une unité d'introduction réalisée sous la forme d'appareil de pointage (4.2) par appui sur une touche de cette unité d'introduction lorsque l'index de l'appareil de pointage (4.2) est placé dans la zone de titres (21.1, 31.1) de la fenêtre d'affichage (20, 30).

10. Dispositif suivant la revendication 1, **caractérisé** par le fait que plusieurs états de fonctionnement qui peuvent être sélectionnés dans la fenêtre d'affichage (20, 30) respectivement activée sont possibles pour chaque unité d'usinage (3a, 3b, 3c, 3d).
